# EUROPEAN PATENT APPLICATION

(11) **EP 2 218 503 A1**
(43) Date of publication of application: **18.08.2010**
(21) Application number: 08847784.9
(22) Date of filing: 30.10.2008
(51) Int. Cl.: B01J 27/24, H01M 4/90

(54) **ELECTRODE CATALYST AND OXYGEN REDUCTION ELECTRODE FOR POSITIVE ELECTRODE USING THE ELECTRODE CATALYST**

(30) Priority: 05.11.2007 JP 2007287231
(71) Applicant: National University Corporation Yokohama National University, Kanagawa 240-8501 (JP)
(72) Inventor: OTA, Ken-ichiro, Yokohama-shi Kanagawa 240-8501 (JP); MITSUSHIMA, Shigenori, Yokohama-shi Kanagawa 240-8501 (JP); ISHIHARA, Akimitsu, Yokohama-shi Kanagawa 240-8501 (JP); OHGI, Yoshiro, Yokohama-shi Kanagawa 240-8501 (JP)
(74) Representative: Dey, Michael
(86) International application number: PCT/JP2008/069747
(87) International publication number: WO 2009/060777

(57) **Abstract**

An electrode catalyst for an oxygen reduction electrode for use in a cathode of a polymer electrolyte fuel cell, produced by oxidizing ZrCN, wherein ZrCN and ZrO₂ are detected by X-ray diffraction of the electrode catalyst, the electrode catalyst has an ionization potential of 5.0 to 6.0 eV, and ZrO₂ is detected by X-ray photoelectron spectroscopy of the electrode catalyst.

## Description

### Field of the Invention

The present invention relates to an oxygen reduction electrode for use in a polymer electrolyte fuel cell.

### Description of the Related Art

Polymer electrolyte fuel cells (PEFCs) operate at a low temperature of 100°C or less, and can be constructed of plastics or inexpensive metals. Such a fuel cell has been developed in order to apply it to mobile devices, mobile power supply and dispersed power supply. This type of the fuel cell has a structure including an anode, a cathode, and a proton conductive polymer electrolyte membrane sandwiched therebetween. Hydrogen or a hydrogen containing fuel (such as a methanol solution) is supplied to the anode, and air is supplied to the cathode. At the anode, hydrogen (fuel) is oxidized, and at the cathode, oxygen is reduced to take out electrical energy to the outside.
The polymer electrolyte fuel cell is classified into a hydrogen type where a hydrogen gas is supplied to the anode, and a direct type where a liquid fuel such as methanol is used as a direct fuel.

Traditionally, platinum supported carbon black is generally used as the cathode. At present, a metal compound is proposed to be used in place of expensive platinum as the electrode catalyst. As the metal compound, oxides, oxynitrides and nitrides of metals are cited (see non-patent literatures 1, 2 and 3).

[Non-Patent Literature 1] A. Ishihara, et.al., Electrochem. Soild-State Lett., 8, A201 (2005)
[Non-Patent Literature 2] Y. Liu, et.al., Electrochem. Solid-State Lett., A400 (2005) [Non-Patent Literature 3] Oshiro, et al., Electrochemical Society of Japan Meeting 74, lecture overview p. 94 (March 29, 2007)

### Problems to be solved by the Invention

However, oxides, oxynitrides and nitrides of metals have conventionally insufficient catalytic ability as an active material for use in the positive oxygen reduction electrode of the polymer electrolyte fuel cell.
Accordingly, an object of the present invention is to provide an electrode catalyst capable of improving oxygen reduction catalytic ability of the polymer electrolyte fuel cell, and a positive oxygen reduction electrode using the same.

### Summary of the Invention

The present invention provides an electrode catalyst for an oxygen reduction electrode for use in a cathode of a polymer electrolyte fuel cell, produced by oxidizing ZrCN, wherein ZrCN and ZrO₂ are detected by X-ray diffraction of the electrode catalyst, the electrode catalyst has an ionization potential of 5.0 to 6.0 eV, and ZrO₂ is detected by X-ray photoelectron spectroscopy of the electrode catalyst.

A second aspect in accordance with the present invention provides an oxygen reduction electrode for a cathode supporting said electrode catalyst.

A non-platinum electrode catalyst according to the present invention has high performance as an oxygen reduction electrode for use in a cathode of a polymer electrolyte fuel cell.

### BRIEF DESCRIPTION OF THE DRAWINGS

Fig. 1 shows the XRD (X-ray diffraction) patterns of the crystal structures of the electrode catalysts in Examples 1 to 3 and Comparative Examples 1 to 4.
Fig. 2 shows the XRD (X-ray diffraction) pattern at about 28° to 36° of the crystal structure of the electrode catalyst in Example 4.
Fig. 3 shows a relationship between the oxidation degrees and the oxidation onset potential E_{ORR} of the electrode catalysts in Examples 1 to 4 and Comparative Examples 1 to 3.
Fig. 4 shows X-ray photoelectron spectroscopy spectra of the surfaces of the electrodes using the electrode catalysts in Examples 1 to 4.
Fig. 5 shows a difference between current-potential curves by the oxygen reduction reaction of the electrodes using the electrode catalysts in Examples 1 to 4.
Fig. 6 is a SEM (scanning electron microscope) image of the electrode catalyst in Example 1.

### DESCRIPTION OF THE PREFERRED EMBODIMENTS

Embodiments of the present invention are explained below. The potential used in the following description, sole table and figures is based on a reversible hydrogen electrode reference potential, and abbreviated as RHE, if required.

The electrode catalyst of the present invention is supported on the oxygen reduction electrode used as the cathode (air electrode) of the polymer electrolyte fuel cell. In the polymer electrolyte fuel cell, the electrolyte membrane is sandwiched between the cathode and the anode, hydrogen or a hydrogen containing fuel (such as a methanol solution) is supplied from the outside of the anode, and an oxygen containing gas (generally air) is supplied from the outside of the cathode to take out electrical energy to the outside.
The anode and the cathode are generally formed, for example, by applying the electrode catalyst on a surface of a porous electrode substrate.
The electrode catalyst of the present invention is effective for both of the hydrogen type using a hydrogen gas and the direct type using a liquid fuel. In the case of the direct type, a fuel containing carbon and hydrogen atoms in its chemical structure, for example, alcohol and ether, can be used. Examples of the fuel include methanol, ethanol, glycol, acetal, dimethylether and the like. Among them, methanol has low activation energy during the oxidation reaction. Therefore, when methanol is used as the fuel, energy conversion efficiency of the fuel cell is effectively improved.

### <Electrode catalyst>

The electrode catalyst of the present invention is produced by oxidizing ZrCN. ZrCN and ZrO₂ are detected by X-ray diffraction of the electrode catalyst. The electrode catalyst has an ionization potential of 5.0 to 6.0 eV. ZrO₂ is detected by X-ray photoelectron spectroscopy of the electrode catalyst.
Through diligent studies, the inventors of the present invention found that the above-mentioned mixture has high oxygen reduction catalytic ability as compared to ZrCN alone or ZrO₂ alone, as described later.
In the present invention, the notation ZrCN includes an amorphous substance of Zr, C, N and crystal at a predetermined atom ratio. The same is applied to other compounds.

The electrode catalyst of the present invention is produced by oxidizing ZrCN, and the oxidizing conditions involves a heat treatment of ZrCN at about 1000 to 1400°C for several to tens hours. The atmosphere of the heat treatment should include oxygen, but the oxygen concentration is not especially limited. The atmosphere of the heat treatment can be a mixture gas containing an inert gas and several % (% by volume) of oxygen. Examples include a mixture gas of (98% nitrogen + 2% hydrogen) gas and 0.25% of an oxygen gas, or a mixture gas of argon and 1% of an oxygen gas.
When ZrCN is oxidized, ZrCN and ZrO₂ are detected by X-ray diffraction of the electrode catalyst, and ZrO₂ is detected by X-ray photoelectron spectroscopy of the electrode catalyst. It is presumed that a core of the electrode catalyst is ZrCN and the surface is oxidized to ZrO₂, which is different from a simple mixture of ZrCN and ZrO₂.
Although ZrO₂ may be actually ZrO₂₋ₓ, hereinafter, the notation ZrO₂ includes ZrO₂ and ZrO₂₋ₓ (x is a positive number).
In addition, since the electrode catalyst has an ionization potential of 5.3 to 5.6 eV, it suggests that ZrO₂ on the surface of the electrode catalyst has defects, as described later.

Table 1 shows a relationship between the oxygen reduction onset potential and ionization energy as described later in Examples. It shows that the ionization potential is lowered, as the oxygen reduction onset potential is increased, thereby promoting the catalytic activity. In view of Table 1, in order to provide the oxygen reduction onset potential of 0.8 V or more, the ionization potential should be 5.3 eV or less. The reason why the oxygen reduction onset potential E_{ORR} have to be 0.8 V or more is that the operating voltage of the fuel cell is practicable only when the oxygen reduction onset potential is 0.8 V or more. When the oxygen reduction onset potential is 0.8 V or more, the fuel cell has sufficient oxygen reduction ability.
In each Example of the present invention, the ionization potential is within 5.0 to 6.0 eV, and the oxygen reduction onset potential is 0.8 V or more. Accordingly, the ionization potential of the electrode catalyst of the present invention is set out to 5.0 to 6.0 eV. According to the present invention, the ionization potential is preferably within 5.2 to 5.7 eV.

**[Table 1]**

| | Electrode catalyst | E_{ORR}(V) | lonization potential (eV) |
|---|---|---|---|
| Ex 1 | Heat treatment of ZrCN at 1000°C | 0.9 | 5.2 |
| Ex 2 | Heat treatment of ZrCN at 1200°C | 0.93 | 5.4 |
| Ex 3 | Heat treatment of ZrCN at 1400°C | 0.86 | 5.6 |
| Ex. 4 | Heat treatment of ZrCN at 1000°C (oxygen concentration adjusted) | 0.82∼0.9 | 5.2∼5.6 |
| Comp. Ex 1 | ZrCN alone | 0.58 | 5.3 |
| Comp. Ex. 2 | ZrO₂ alone | 0.57 | 7.2 |
| Comp. Ex 3 | ZrCN alone +ZrO₂ alone | 0.76 | 5.2 |
| Comp. Ex. 4 | Electrodeposition of ZrCN on Ti substrate (heat treatment at 1000°C) | 0.58 | 7.2 |
| Ref. Ex. | Pt | 1.05 | - |

The oxygen reduction onset potential is set forth as follows: a potential scan is conducted in a 0.1 mol/L of sulfuric acid solution at 30°C at a scan speed of 5 mV/s. A difference between a current value measured under an oxygen atmosphere and a current value measured under a nitrogen atmosphere is converted into a current density i₀₂ based on a geometric surface area. When i₀₂ is -0.1 µAcm⁻², the potential is the oxygen reduction onset potential E_{ORR}.
The oxygen reduction onset potential is for estimating the oxygen reduction current per unit amount of the catalyst. When the oxygen reduction current starts to flow at the higher potential, the activation energy in the reaction may be small. In this case, the reduction current value can be increased by an engineered modification to increase the surface area of the catalyst.

The electrode catalyst of the present invention has the ionization potential of 5.0 to 6.0 eV. In contrast, ZrO₂ alone has the reported ionization potential value of 7.4 eV (J. W. Schultze and A. W. Hassel, p.234, in Encyclopedia of Electrochemistry Vol.4, Edited by A. J. Bard and M. Stratmann, Wiley-VCH GmbH & Co. KGaA, Weinheim, (2003)).
In general, it is known that oxygen defects on the surface of the oxide may decrease the ionization potential, which has metal-like nature (V. E. Henrich et al., Phys. Rev. Lett., 36, 1335 (1976)). It is found that adsorption of oxygen molecules to the surface of the oxide require oxygen defects (J.-M. Pan et al., J. Vac. Sci. Technol.A, 10, 2470 (1992), A. L. Lisebigler et al., Chem. Rev., 95, 735 (1995), C. Descorme et al., J. Catal., 196, 167(2000)).

Since the oxygen reduction reaction is started by adsorbing oxygen molecules, it is needed to form the oxygen defects on the surface in order to improve the oxygen reduction catalyst. As the oxygen defects are increased, the ionization potential is decreased. It is contemplated that when ZrCN and ZrO₂ coexist in the electrode catalyst, the oxygen defects are formed on ZrO₂ such that the ionization potential is decreased.
The ionization potential can be measured in atmosphere using a photoelectronic spectrometer (for example, the product name AC-2 manufactured by RIKEN KEIKI Co., Ltd.).

The oxygen reduction electrode including the above-described electrode catalyst has excellent oxygen reduction catalytic ability and stability in the acidic electrolyte.

### <Production of the electrode>

The electrode can be, for example, produced as follows: Powder of the above-described electrode catalyst is mixed with a known binder to provide a paste. The paste is applied on the surface of the support, and is dried to produce the electrode. Examples of the support include carbon powder and conductive oxide powder.
For example, it is preferable that carbon black is used as conductive powder for the electrode of the fuel cell, and it is preferable that the fine particles of the electrode catalyst have a particle size of about 2 to 3 nm so that the catalytic ability can be provided even if a small amount of the catalyst is added.

The electrode of the present invention can be suitably used as a cathode electrode of an electrochemical system using an acidic electrolyte such as electrolysis of water, inorganic substances or organic substances, and a fuel cell. The electrode of the present invention is suitable as an oxidant electrode when an acidic electrolyte is used such as phosphoric acid fuel cell and polymer electrolyte fuel cell.

The present invention will now be further described in more detail in the following examples. However the present invention is not limited by these examples.

### [Example 1]

### <Production of the electrode>

As the electrode catalyst, commercially available ZrCN (powder, manufactured by A.L.M.T. Corp., particle size of 2.2 µm, BET surface area of 0.97 m²/g, carbon content of 5.52 wt %, nitrogen content of 6.77 wt %) was heated at 1000°C for 15 hours in a gas mixture atmosphere obtained by mixing (98% of nitrogen + 2% hydrogen) with 0.25% of oxygen. The resultant powder and ketjen black were mixed uniformly to let the content of the ketjen black to 5 wt %. About 9.0 mg/cm² of the mixed powder was applied on glassy carbon. A diluted Nafion solution was dropped onto the applied surface and was dried to coat the catalyst powder with Nafion, thereby providing a working electrode.

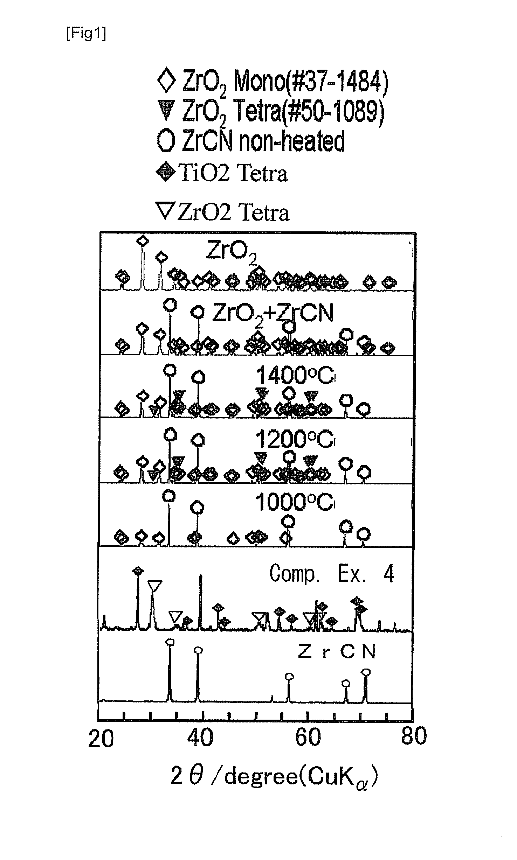

Fig. 1 shows the crystal structure of the resultant electrode catalyst identified by the X-ray diffractometer. Together with the diffraction peak of ZrCN, the diffraction peak of ZrO₂ Mono (JCPDS 37-1484) was also identified. JCPDS (Joint Committee on Powder Diffraction Standards) is a card number assigned by the organization for producing the X-ray diffraction database.

### [Example 2]

The electrode was produced and identified in the exactly same manner described in Example 1 with the exception that ZrCN was heated at 1200°C.

### [Example 3]

The electrode was produced and identified in the exactly same manner described in Example 1 with the exception that ZrCN was heated at 1400°C.

### [Example 4]

A predetermined amount of ZrCN powder used in Example 1 was used. An oxidized gas was formed by mixing 98% nitrogen and 2% hydrogen with 0.2 to 0.8 vol% of oxygen. Under the oxidized gas atmosphere, the powder was heated at 1000°C for 20 hours. In the exactly same manner described in Example 1, the electrode was produced and identified.

### <Comparative Example 1>

The electrode was produced and identified in the exactly same manner described in Example 1 with the exception that commercially available ZrCN (the product similar to that in Example) was used as the electrode catalyst without modification.

### <Comparative Example 2>

The electrode was produced and identified in the exactly same manner described in Example 1 with the exception that commercially available ZrO₂ (powder, manufactured by JUNSEI CHEMICAL CO., LTD.) was used as the electrode catalyst without modification.

### <Comparative Example 3>

The electrode was produced and identified in the exactly same manner described in Example 1 with the exception that commercially available ZrCN and ZrO₂ used in Comparative Examples 1 and 2 were mixed at a mass ratio of 1:1 and were used as the electrode catalyst without modification.

### <Comparative Example 4>

As described in non-patent literature 3, ZrCN powder was electrodeposited on a Ti substrate, which was heated at 1000°C for 1 hour in the oxidized gas having the same composition as that in Example 1. The powder was used as the electrode catalyst, and the electrode was produced and identified in the exactly same manner described in Example 1.

### <Measurement of reduction current>

The above-described electrode was used as a cathode, a carbon plate was used as a counter electrode, and a reversible hydrogen electrode having a sulfuric acid concentration of 0.1 mol/L was used as a reference electrode. A potential scan was conducted at 0.05 to 1.0 V in a 0.1 mol/L of sulfuric acid solution at 30°C at a scan speed of 5 mV/s to measure the reduction current i₀₂. A difference between a current value measured under an oxygen atmosphere and a current value measured under a nitrogen atmosphere was converted into a current density based on a geometric surface area. The Tafel plot was obtained by a plot of the resultant current vs. potential curve. When i₀₂ was -0.1 µAcm⁻², the potential was the oxygen reduction onset potential E_{ORR}.

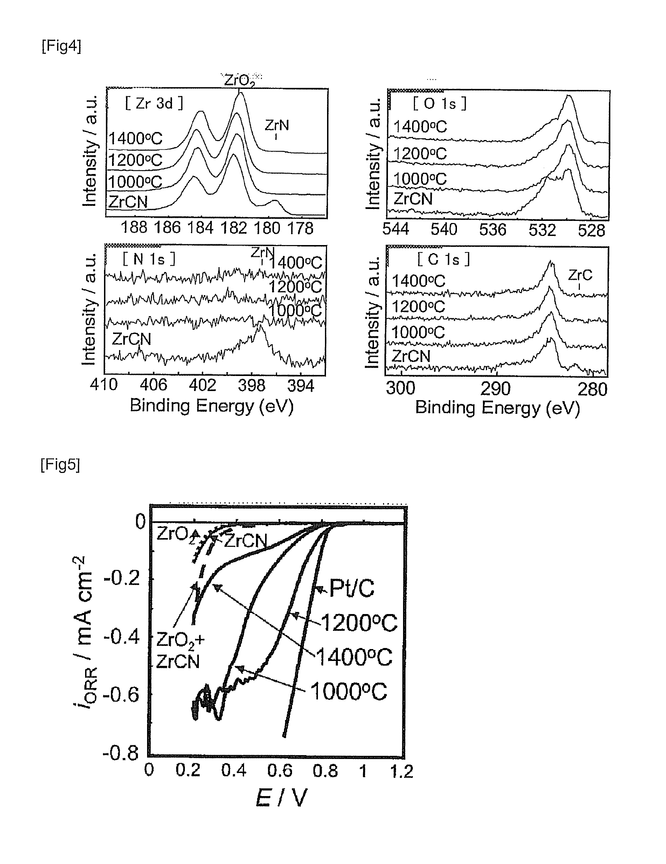

The results are shown in Table 1, Figs. 1 to 5. The X-ray photoelectron spectroscopy spectra of the surfaces of the resultant electrodes are shown in Fig. 4.
In Table 1, the values of E_{ORR} were determined by the measurement of the reduction current as described above. The ionization potential was measured in atmosphere using a photoelectronic spectrometer (the product name AC-2 manufactured by RIKEN KEIKI Co., Ltd.).

Table 1 reveals that the oxygen reduction onset potentials E_{ORR} were 0.8 V or more, and the ionization potentials were 5.3 to 5.6 eV in Examples 1 to 4, which resulted in high catalytic ability. The higher the oxygen reduction onset potential is, the higher the catalytic ability is.
In contrast, E_{ORR} were less than 0.8 V in Comparative Examples 1 and 2 (ZrCN alone and ZrO₂ alone), which resulted in low catalytic ability. E_{ORR} was less than 0.8 V in Comparative Example 3 (a mixture of ZrCN alone and ZrO₂ alone), which resulted in low catalytic ability. E_{ORR} was well less than 0.8 V in Comparative Example 4 in which oxidation was proceeded due to the existence of the Ti substrate and other reasons, which resulted in no catalytic ability.
In Reference Example, the electrode was prepared as follows: a platinum supported carbon powder catalyst (platinum supported amount of 46.3wt%, manufactured by Tanaka Kikinzoku. Kogyo K. K.,) was applied on glassy carbon, and Nafion was coated thereon in the same manner described in Example 1.
As a result, the high catalytic ability cannot be obtained by merely mixing ZrCN alone and ZrO₂ alone. It is found that partial oxidation is important therefor.

The X-ray diffraction shown in Fig. 1 was measured at 15° to 85°. As shown in Fig. 1, ZrO₂ Mono was formed by the heat treatment, and increased at higher heating temperatures in Examples 1 to 4. In Example 3, ZrO₂ Tetra (JCPDS 50-1089) was identified as well as ZrO₂ Mono, which reveals that crystal growth of the oxides was proceeded. In Example 1, no ZrO₂ Tetra was observed, and the peaks of ZrO₂ Mono were low as compared with those in Examples 2 and 3. It can conclude that the oxidation is not so proceeded in Example 1. In Comparative Example 4, no X-ray diffraction peak for identifying the structure of ZrCN is observed, only ZrO₂ and TiO₂ Tetragonal structures were observed, and there was no diffraction peak of ZrO₂ monoclinic. It is assumed that the oxidation is significantly proceeded in Comparative Example 4.

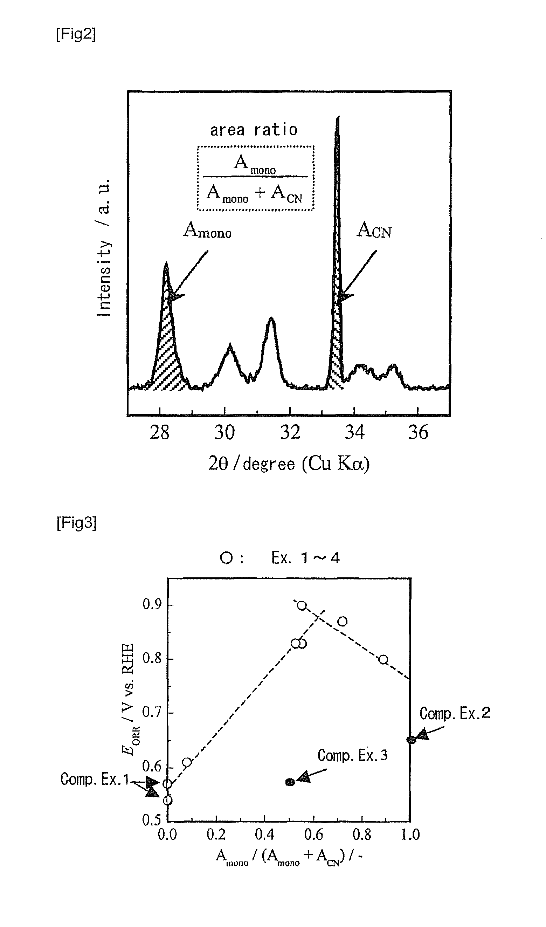

Fig. 2 shows the XRD (X-ray diffraction) pattern at about 28° to 36° of the electrode catalyst in Example 4. To evaluate the oxidation degree in Example 4, an area ratio [Aₘₒₙₒ/(Aₘₒₙₒ + A_{AN}) of an area (A_{AN}) of the diffraction peak of ZrCN about 33° to an area (Aₘₒₙₒ) of the diffraction peak of ZrO₂ about 28° was determined from Fig. 2. The area ratio is in proportion to the order of the oxidation atmosphere in the heat treatment.
Fig. 3 shows a relationship between the area ratio and the E_{ORR}. The data obtained in Examples 1 to 4 and Comparative Examples 1 to 3 are shown. In Fig. 3, there is a maximal value. As the oxidation degree is increased, the E_{ORR} is also increased. Thus, the catalytic ability can be exhibited. However, the electrode catalyst in Comparative Example 3 where the materials are simply mixed is not within the range. Also, it is found that when [Aₘₒₙₒ/(Aₘₒₙₒ + A_{AN}) exceeds 0.8, the E_{ORR} tends to be decreased, and the electrode catalyst ability starts to be lowered. It can be concluded that the existence of ZrCN and ZrO₂ is essential, and the oxidation conditions may be adjusted so that the value of the area ratio is 0.3 to 0.9, preferably 0.4 to 0.8,

Fig. 4 reveals that oxidation on the surfaces of the electrode catalysts in Examples 1 to 4 were proceeded by the heat treatment. This might be presumed that referring to peaks in Zr(3d), the starting substance ZrCN had a peak of ZrN, which was lost in each Example to which the heat treatment was subjected, instead only a 3d spectrum of ZrO₂ was observed. In the case of the starting substance ZrCN, referring to peaks in N(1s), a peak attributed to ZrN was clearly observed, and referring to peaks in C(1s), a small peak attributed to ZrC near 281 eV was observed. However, these peaks were lost in each Example to which the heat treatment was subjected. In view of the above, it can be assumed that the heat treatment enhances the oxidation of the surface. Among Examples 1 to 4, no significant difference was observed by the XPS measurement.
In Figs. 1, 4, 5 and 6, the symbol "1000°C" denotes Examples 1 and 4, the symbol "1200°C" denotes Example 2, the symbol "1400°C" denotes Example 3, and the symbol "Pt/C" denotes Reference Example.

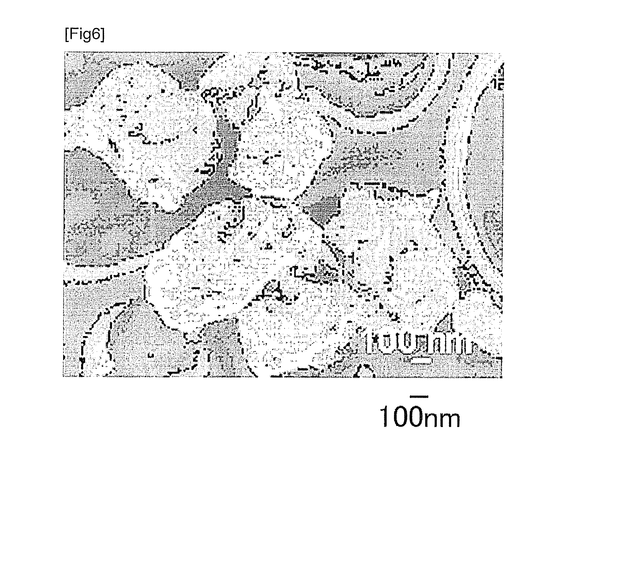

Fig. 6 is a SEM (scanning electron microscope) image of the electrode catalyst in Example 1. It shows that the electrode catalyst is fine powder having a particle size of few hundreds nm.

## Claims

1. An electrode catalyst for an oxygen reduction electrode for use in a cathode of a polymer electrolyte fuel cell, produced by oxidizing ZrCN, wherein ZrCN and ZrO₂ are detected by X-ray diffraction of the electrode catalyst, the electrode catalyst has an ionization potential of 5.0 to 6.0 eV, and ZrO₂ is detected by X-ray photoelectron spectroscopy of the electrode catalyst.

2. An oxygen reduction electrode for a cathode supporting the electrode catalyst according to Claim 1.
